# EUROPEAN PATENT APPLICATION

(11) **EP 4 260 772 A1**
(43) Date of publication of application: **18.10.2023**
(21) Application number: 21902221.7
(22) Date of filing: 19.10.2021
(51) Int. Cl.: A47J 36/34, A47J 36/20

(54) **STEAMER ASSEMBLY AND COOKING APPLIANCE**

(30) Priority: 09.12.2020 CN 202022979063 U
(71) Applicant: Zhejiang Supor Electrical Appliances Manufacturing Co., Ltd., Hangzhou, Zhejiang 310051 (CN)
(72) Inventor: YANG, Jie, Hangzhou, Zhejiang 310051 (CN)
(74) Representative: LLR
(86) International application number: PCT/CN2021/124730
(87) International publication number: WO 2022/121514

(57) **Abstract**

A steamer assembly (10) and a cooking appliance. The steamer assembly (10) comprises a steamer (11) and a steamer support (12). An accommodating cavity (111) is formed inside the steamer (11), and positioning holes (112) distributed at intervals are provided on the bottom of the steamer (11); the steamer support (12) comprises positioning portions (121), wherein the positioning holes (112) match the positioning portions (121), so that the steamer (11) can be located at different heights with respect to the steamer support (12). By matching the positioning holes (112) of the steamer (11) and the positioning portions (121) of the steamer support (12), the steamer assembly (10) can adjust the height of the steamer (11) with respect to the steamer support (12) according to actual needs during using, so as to correspondingly adjust the size of a food steaming space, thereby satisfying a variety of cooking requirements of a user.

## Description

### Field

The present application relates to the technical field of cooking, and in particular to a steamer assembly and cooking appliance.

### Background

To allow a user to steam and stew food at the same time, existing cooking appliances such as electrical rice cookers are often equipped with a steamer. However, the position of an existing steamer in an inner pot of a cooking appliance is fixed. In other words, in an existing cooking appliance, the height of the steamer cannot be adjusted based on actual needs. Accordingly, the size of the food steaming space cannot be adjusted, either, making it impossible to meet a user's needs when cooking a variety of food. It is relatively inconvenient to use.

To this end, the present application provides a steamer assembly and a cooking appliance to at least partially solve the problems in the relevant art.

### Summary of the invention

A series of concepts in simplified form are introduced in the "Summary of the Invention" section, which will be described in further detail in the "Detailed Description of the Embodiments" section. The "Summary of the Invention" section of the present application is not intended to limit the key features and essential technical features of the claimed technical solutions. Nor is it intended to attempt to determine the scope of protection of the claimed technical solutions.

To at least partially solve the above-described problems, according to an aspect of the present application, a steamer assembly is disclosed, comprising:
a steamer, inside which an accommodating cavity is formed, the steamer being provided at its bottom with positioning holes spaced apart;
a steamer support comprising positioning portions;
wherein the positioning holes and the positioning portions cooperate with each other so that the steamer can be positioned at different heights relative to the steamer support.

In the steamer assembly according to the present application, by means of the cooperation between the positioning holes of the steamer and the positioning portions of the steamer support, it's possible to adjust the height of the steamer relative to the steamer support based on actual needs, and adjust correspondingly the size of the food steaming space during utilization of the steamer assembly, thus meeting a variety of cooking needs of a user.

Optionally, the positioning holes comprise at least two positioning through-holes arranged in the circumferential direction of the steamer and having different sizes.

According to this solution, by providing the positioning holes as positioning through-holes distributed in the circumferential direction of the steamer and having different sizes, cooperation with the positioning portions of the steamer support so as to adjust the height of the steamer relative to the steamer support is facilitated.

Optionally, the positioning holes comprise a first positioning through-hole and a second positioning through-hole having different sizes in the circumferential direction of the steamer, and
the positioning portions comprise a first positioning portion that cooperates with the first positioning through-hole and a second positioning portion that cooperates with the second positioning through-hole, the first positioning portion and the second positioning portion having different heights.

According to this solution, by providing the first positioning through-hole and the second positioning through-hole that have different sizes, and the first positioning portion and the second positioning portion that cooperate respectively with the first positioning through-hole and the second positioning through-hole and have different heights, manufacturing and user operation are facilitated.

Optionally, the positioning holes comprise two first positioning through-holes and two second positioning through-holes, which are arranged symmetrically relative to the central axis of the steamer in the circumferential direction of the steamer.

According to this solution, on one hand, the arrangement of the first positioning through-holes and the second positioning through-holes, and manufacturing and user operation are facilitated; on the other hand, it is ensured that when the positioning holes cooperate with the positioning portions, the positioning portions are uniformly solicited.

Optionally, the first positioning portion comprises a first horizontal part extending outward in the direction of the width of the steamer support, and a first vertical part extending upward and arranged substantially perpendicularly to the first horizontal part, the first vertical part being capable of being inserted inside the first positioning through-hole, the projection of the first horizontal part in the vertical direction on the plane where the first positioning through-hole is located not fully coinciding with the first positioning through-hole.

According to this solution, the structure of the first positioning portion is simplified, and as the projection of the first horizontal part in the vertical direction on the plane where the first positioning through-hole is located does not fully coincide with the first positioning through-hole, after the first vertical part is inserted into the first positioning through-hole, the first horizontal part can abut against the bottom of the steamer, providing support to the steamer. Thus, the steamer can be stably positioned at the height of the first positioning portion.

Optionally, the second positioning portion comprises a second horizontal part extending outward in the direction of the width of the steamer support, and a second vertical part extending upward and arranged substantially perpendicularly to the second horizontal part, the second vertical part and the first horizontal part being connected with each other, the second vertical part being capable of being inserted inside the second positioning through-hole, the projection of the second horizontal part in the vertical direction on the plane where the second positioning through-hole is located not fully coinciding with the second positioning through-hole.

According to this solution, the structure of the second positioning portion is simplified, and as the projection of the second horizontal part in the vertical direction on the plane where the second positioning through-hole is located does not fully coincide with the second positioning through-hole, after the second vertical part is inserted into the second positioning through-hole, the second horizontal part can abut against the bottom of the steamer, providing support to the steamer. Thus, the steamer can be stably positioned at the height of the second positioning portion.

Optionally, the first positioning portion and the second positioning portion are arranged symmetrically relative to the central line of the steamer support in the direction of the length of the steamer support; and/or
the first positioning portion and the second positioning portion are arranged symmetrically relative to the central line of the steamer support in the direction of the width of the steamer support.

According to this solution, on one hand, the arrangement of the first positioning portion and the second positioning portion, and manufacturing and user operation are facilitated; on the other hand, it is ensured that when the positioning holes cooperate with the positioning portions, the positioning portions are uniformly solicited.

Optionally, the steamer support further comprises a supporting part comprising a horizontal supporting part extending in the direction of the length of the steamer support and a vertical supporting part extending upward and arranged substantially perpendicularly to the horizontal supporting part, the vertical supporting part and the second horizontal part being connected with each other.

According to this solution, by means of the horizontal supporting part, the positioning portions the cooperate with two positioning holes can be connected to form an overall structure, which facilitates utilization by a user. By means of the vertical supporting part, when the steamer is positioned at the height of the second positioning portion, there exists a certain distance between the steamer and the bottom of the steamer support. Thus, when the steamer assembly is placed in an inner pot, there exists a certain distance between the steamer and the inner pot, which prevents the steamer from coming into direct contact with the inner pot.

Optionally, the steamer support is provided at its top end with handle parts that can be inserted into the positioning holes.

According to this solution, placing the steamer assembly into or removing it from an inner pot by a user during utilization of the steamer assembly is facilitated.

According to a second aspect of the present application, a cooking appliance is provided, comprising:
a pot body inside which an inner pot is arranged;
a lid body arranged on the pot body in such a manner that it can be opened and closed, a cooking space being formed between the lid body and the inner pot when the lid body closes the pot body;
the above-described steamer assembly, arranged inside the inner pot, a bottom end of the steamer support being supported on an inner wall of the inner pot.

In the cooking appliance according to the present application, by means of the cooperation between the positioning holes of the steamer of the steamer assembly and the positioning portions of the steamer support, it's possible to adjust the height of the steamer relative to the steamer support based on actual needs and adjust correspondingly the size of the food steaming space during utilization of the steamer assembly, thus meeting a variety of cooking needs of a user.

### Brief Description of the Drawings

The following drawings of the present application, here as part of the present application, are for understanding the present application. Embodiments of the present application and their description are shown in the drawings to explain the principles of the present application.

In the drawings:
Fig. 1 is a schematic exploded structural view of a steamer assembly according to a preferred mode of realization of the present application;
Fig. 2 is a schematic assembled view of a steamer assembly according to a preferred mode of realization of the present application, wherein a steamer is positioned at a first positioning portion;
Fig. 3 is a schematic top view of a steamer of a steamer assembly according to a preferred mode of realization of the present application; and
Fig. 4 is a schematic view of a steamer assembly according to a preferred mode of realization of the present application when it is placed inside an inner pot.

**List of reference numerals:**

| | | | |
|---|---|---|---|
| 10: | steamer assembly | 11: | steamer |
| 111: | accommodating cavity | 112: | positioning hole |
| 113: | first positioning through-hole | 114: | second positioning through-hole |
| 115: | bottom wall | 116: | side wall |
| 117: | venting hole | 12: | support |
| 121: | positioning portion | 123: | first positioning portion |
| 123a: | first horizontal part | 123b: | first vertical part |
| 124: | second positioning portion | 124a: | second horizontal part |
| 124b: | second vertical part | 125: | handle part |
| 126: | supporting part | 126a: | horizontal supporting part |
| 126b: | vertical supporting part | 130: | food steaming chamber |
| 20: | inner pot | | |

### Detailed Description of the Embodiments

In the following description, numerous specific details are given in order to provide a more thorough understanding of the present application. It will be apparent, however, to a person skilled in the art that modes of realization of the present application may be implemented without one or more of these details. In other examples, in order to avoid confusion with modes of realization of the present application, some technical features known in the art are not described.

In order to thoroughly understand modes of realization of the present application, detailed structures will be set forth in the following description. Obviously, implementation of modes of realization of the present application is not limited to specific details familiar to those skilled in the art. It should be noted that the ordinal numbers such as "first" and "second" cited in the present application are only for identification and do not have any other meaning, such as a specific order. Also, for example, the term "first element" itself does not imply the existence of a "second element", and the term "second element" itself does not imply the existence of a "first element". As used in the present application, the terms "upper," "lower," "front," "rear," "left," "right," and similar expressions are for the purpose of description only and are not limiting.

The present application discloses a steamer assembly 10 and a cooking appliance comprising the same. The cooking appliance mentioned in the present application can be an electrical rice cooker, electrical pressure cooker, or other electrical heating appliances. The cooking appliance comprises a pot body (not illustrated) and a lid body (not illustrated). The lid body is capable of being connected pivotably with the pot body. The pot body is in the general shape of a cuboid with rounded corners, and has an inner pot receiving part in the shape of a circular cylinder. An inner pot 20 can be configured to be freely placed into or removed from the inner pot receiving part so as to facilitate cleaning of the inner pot 20. The inner pot 20 is made of a metal material and used for holding a material to be heated, such as rice, soup, etc. The lid body is capable of closing the pot body so as to form a cooking space between the lid body and the inner body 20. The pot body is provided at its bottom with a heating assembly used for heating the inner pot 20.

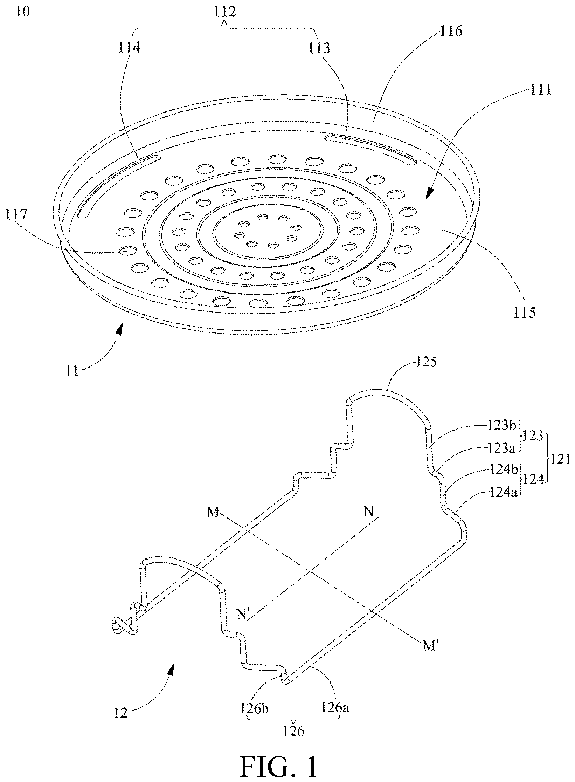

A removable steamer assembly 10 is further arranged inside the inner pot 20 so as to fulfill food steaming function of the cooking appliance. After the steamer assembly 10 is placed inside the inner pot 20, a bottom end of a steamer support 12 is supported on an inner wall of the inner pot 20. Below, with reference to Figs. 1 to 4, a steamer assembly 10 according to a preferred mode of realization of the present application will be described in detail.

With reference to Fig. 1, the steamer assembly 10 comprises a steamer 11 and a steamer support 12. The steamer 11 comprises a bottom wall 115 and a side wall 116 extending upward from the edge of the bottom wall 115. The bottom wall 115 and the side wall 116 together form an accommodating cavity 111 for accommodating food. The bottom wall 115 is provided with venting holes 117, preferably distributed uniformly, used for the passing of vapor generated inside the inner pot 20 so as to heat food placed on the steamer 11.

The steamer 11 is provided at its bottom, that is, the bottom wall 115 of the steamer 11, with positioning holes 112 spaced apart. The steamer support 12 comprises positioning portions 121. By means of the cooperation between the positioning holes 112 and the positioning portions 121, the steamer 11 can be positioned at different heights relative to the steamer support 12.

Preferably, the positioning holes 112 comprise at least two positioning through-holes arranged in the circumferential direction of the steamer and having different sizes, so as to facilitate cooperation with the positioning portions 121 of the steamer support and thus adjust the height of the steamer 111 relative to the steamer support 12.

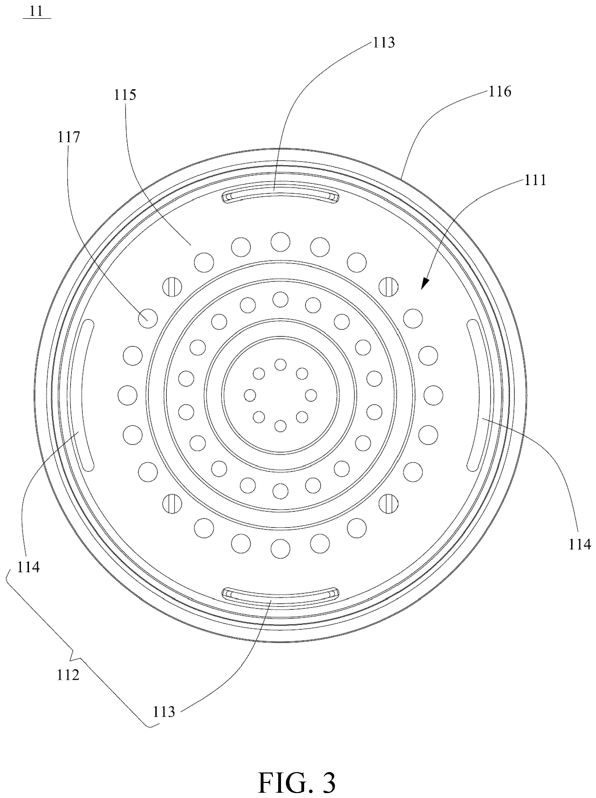

Specifically, with reference to Figs. 1 and 3, the positioning holes 112 comprise a first positioning through-hole 113 and a second positioning through-hole 114, which are distributed in a spaced apart manner in the circumferential direction of the steamer 11, and have different sizes in the circumferential direction of the steamer 11. The positioning portions 121 comprise a first positioning portion 123 that cooperates with the first positioning through-hole 113, and a second positioning portion 124 that cooperates with the second positioning through-hole 114, which have different heights in the direction of the height of the steamer support 12. By means of the cooperation between the first positioning through-hole 113 and the first positioning portion 123, the steamer 11 can be positioned at the height of the first positioning portion 123 relative to the steamer support 12. By means of the cooperation between the second through-hole 114 and the second positioning portion 124, the steamer 11 can be positioned at the height of the second positioning portion 124 relative to the steamer support 12.

Specifically, two first positioning through-holes 113 are provided and are configured to be in the shape of an arc in the circumferential direction of the steamer 11. In addition, the two first positioning through-holes 113 are preferably arranged symmetrically relative to the central axis of the steamer 11, so as to facilitate the arrangement of the first positioning through-holes 113.

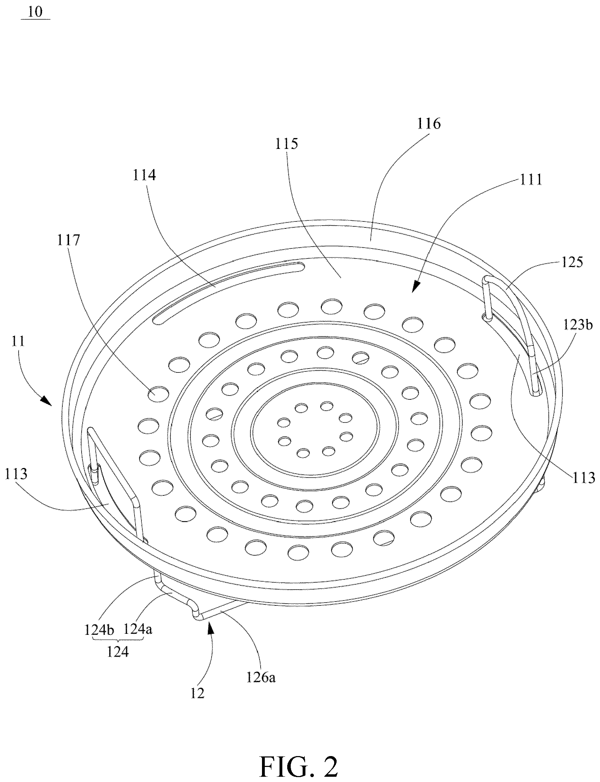

The steamer support 12 are provided respectively at its two ends in the direction of the length of the steamer support 12, with two first positioning portions 123 that cooperate with the first positioning through-holes 113. The first positioning portion 123 comprises a first horizontal part 123a and a first vertical part 123b. The first horizontal part 123a extends outward in the direction of the width of the steamer support 12. The first vertical part 123b is connected to an inner side end of the first horizontal part 123a and arranged to be substantially perpendicular to the first horizontal part 123a and extend upward. The maximal distance between the two first vertical parts 123b is smaller than the size of the first positioning holes 113 in the circumferential direction of the steamer 11, so that the first vertical parts 123b are capable of passing through the first positioning through-holes 113. The projection of the first horizontal parts 123a in the vertical direction on the plane in which the first positioning through-holes 113 are located does not coincide fully with the first positioning through-holes 113. In other words, the minimal distance between the two first horizontal parts 123a is smaller than the size of the first positioning through-holes 113 in the circumferential direction of the steamer 11, i.e., the distance between the most inner sides of the two first horizontal parts 123a is smaller than the size of the first positioning through-holes 113 in the circumferential direction of the steamer 11; the maximal distance between the two first horizontal parts 123a is larger than the size of the first positioning through-holes 113 in the circumferential direction of the steamer 11, i.e., the distance between the most outer sides of the two first horizontal parts 123a is larger than the size of the first positioning through-holes 113 in the circumferential direction of the steamer 11, so that the first horizontal parts 123a are incapable of passing through the first positioning through-holes 113. After the first vertical parts 123b pass through the first positioning through-holes 113, the first horizontal parts 123a can abut against the bottom of the steamer 11 to provide a certain support to the steamer 11, so that the steamer 11 is placed stably at the height of the first positioning portions 123, for which one can refer to Fig. 2 specifically.

Similarly, two second positioning through-holes 114 are provided and configured in the shape of an arc in the circumferential direction of the steamer 11_{∘} In addition, the two positioning through-holes 114 are preferably arranged symmetrically relative to the central axis of the steamer 11, so as to facilitate the arrangement of the second positioning through-holes 114. The size of the second positioning through-holes 114 is larger than the size of the first positioning through-holes 113 in the circumferential direction of the steamer 11.

The steamer support 12 are provided respectively at its two ends in the direction of the length of the steamer support 12, with second positioning portions 124 that cooperate with two second positioning through-holes 114. The second positioning portions 124 are arranged below the first positioning portions 123. The second positioning portion 124 comprises a second horizontal part 124a and a second vertical part 124b. The second horizontal part 124a extends outward in the direction of the width of the steamer support 12. The second vertical part 124b is connected at its bottom end to an inner side end of the second horizontal part 124a and arranged to be substantially perpendicular to the second horizontal parts 124a and extend upward. The second vertical part 124b is connected at its upper end to an outer side end of the first horizontal part 124a. The maximal distance between the two second vertical parts 124b is smaller than the size of the second positioning holes 114 in the circumferential direction of the steamer 11, so that the second vertical parts 124b are capable of passing through the second positioning through-holes 114. The projection of the second horizontal parts 124a in the vertical direction on the plane in which the second positioning through-holes 114 are located does not coincide fully with the second positioning through-holes 114. In other words, the minimal distance between the two second horizontal parts 124a is smaller than the size of the second positioning through-holes 114 in the circumferential direction of the steamer 11, i.e., the distance between the most inner sides of the two second horizontal parts 124a is smaller than the size of the second positioning through-holes 114 in the circumferential direction of the steamer 11; the maximal distance between the two second horizontal parts 124a is larger than the size of the second positioning through-holes 114 in the circumferential direction of the steamer 11, i.e., the distance between the most outer sides of the two second horizontal parts 124a is larger than the size of the second positioning through-holes 114 in the circumferential direction of the steamer 11, so that the second horizontal parts 124a are incapable of passing through the second positioning through-holes 114. After the second vertical parts 124b pass through the second positioning through-holes 114, the second horizontal parts 124a can abut against the bottom of the steamer 11 to provide a certain support to the steamer 11, so that the steamer 11 is placed stably at the height of the second positioning portions 124.

Still with reference to Fig. 1, both the first positioning portions 123 and the second positioning portions 124 are preferably configured to be symmetric relative to the central line NN' of the steamer support 12 in the direction of the width of the steamer support 12, so as to facilitate the arrangement of the first positioning portions 123 and the second positioning portions 124 and ensure that when the steamer 11 is mounted to the positioning portions 121, the first positioning portions 123 and the second positioning portions 124 are uniformly solicited.

Similarly, both the first positioning portions 123 and the second positioning portions 124 are preferably configured to be symmetric relative to the central line MM' of the steamer support 12 in the direction of the length of the steamer support 12, so as to facilitate the arrangement of the first positioning portions 123 and the second positioning portions 124 and ensure that when the steamer 11 is mounted to the positioning portions 121, the first positioning portions 123 and the second positioning portions 124 are uniformly solicited.

In order to facilitate the placing of the steamer assembly 10 inside the inner pot 20, the steamer support 12 is further provided at its bottom with supporting parts 126 comprising a horizontal supporting part 126a and a vertical supporting part 126b. The horizontal supporting parts 126a extend in the direction of the length of the steamer support 12 and are connected between the second positioning portions 124 at two ends of the steamer support 12, so that the steamer support 12 is formed as an integral structure, which facilitates utilization by a user. The vertical supporting parts 126b are connected at their bottom ends to an end of the horizontal supporting parts 126a and arranged to be substantially perpendicular to the horizontal supporting parts 126a and extend upward. The vertical supporting parts 126b are connected at their top ends to an outer side end of the second horizontal parts 124a. The distance between the top ends of the vertical supporting parts 126b is larger than the size of the positioning holes 112 in the circumferential direction of the steamer 11. In other words, the vertical supporting parts 126b are incapable of passing through the first positioning through-holes 113 and the second positioning through-holes 114. By providing the vertical supporting parts 126b, when the steamer 11 is positioned at the height of the second positioning portions 124, there can be a certain distance between the steamer 11 and the bottom of the steamer support 12. Thus, when the steamer assembly 10 is placed inside the inner pot 20, there is a certain distance between the steamer 11 and the inner pot 20, which prevents the steamer 11 from coming into direct contact with the inner pot 20.

Preferably, the steamer support 12 is provided with handle parts 125 at its top end. Two ends of the handle parts 125 are respectively connected to the top ends of the first vertical parts 123b. The size of the handle parts 125 in the direction of the width of the steamer support 12 is smaller than the size of the positioning holes 112 in the circumferential direction of the steamer 11. In other words, the size of the handle parts 125 in the direction of the width of the steamer support 12 is smaller than the size of the first positioning through-holes 113 and the size of the second positioning through-holes 114 in the circumferential direction of the steamer 11, so that the handle parts 125 are capable of passing through the first positioning through-holes 113 and the second positioning through-holes 114, so as to facilitate a user placing the steamer assembly 10 inside the inner pot 20 or removing it from the inner pot 20. The handle parts 125 are preferably configured to be in the shape of an arc, so as to increase a user's comfort when holding the handle parts 125 and thus improve user experience.

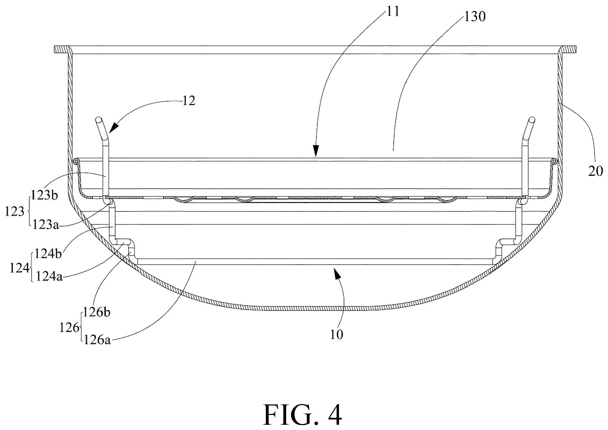

With reference to Fig. 4, during utilization of the steamer assembly 10, after the steamer assembly 10 is placed inside the inner pot 20, the bottom end of the steamer support 12 is supported on an inner wall of the inner pot 20. That is, the supporting parts 126 are supported on the inner wall of the inner pot 20. At this moment, the steamer 11 and the side wall 116 of the inner pot 20 above the steamer 11 together form a food steaming chamber 130. By adjusting the height of the steamer 11 relative to the steamer support 12, the size of the volume of the food steaming chamber 130 can be correspondingly adjusted, so as to meet a user's utilization needs in different situations. For example, when the quantity or height of the food to be steamed is relatively small, the steamer 11 can be placed at the first positioning portion 123 of the steamer support 12, so as to properly reduce the volume of the food steaming chamber 130; when the quantity or height of the food to be steamed is relatively large, the steamer 11 can be placed at the second positioning portion 124 of the steamer 12, so as to properly increase the volume of the food steaming chamber 130.

Unless otherwise defined, technical and scientific terms used herein have the same meaning as commonly understood by a person of ordinary skill in the technical field of the present application. The terminology used herein is only for the purpose of describing a specific implementation, and is not intended to limit the present application. Terms such as "arranged/provided" appearing herein may mean that one component is directly attached to another component or that one component is attached to another component through an intermediary. Features described herein in one mode of realization may be applied to another mode of realization alone or in combination with other features, unless the feature is not applicable in that other mode of realization or otherwise indicated.

The present application has been described through the above modes of realization, but it should be understood that the above-described modes of realization are only for the purpose of illustration and description, and are not intended to limit the present application to the scope of the described modes of realization. Those skilled in the art can understand that more variants and modifications can be made according to the teaching of the present application, and that these variants and modifications all fall within the scope of protection claimed by the present application.

## Claims

1. A steamer assembly **characterized in that** the steamer assembly (10) comprises:
a steamer (11), inside which an accommodating cavity (111) is formed, the steamer (11) being provided at its bottom with positioning holes (112) spaced apart;
a steamer support (12) comprising positioning portions (121);
wherein the positioning holes (112) and the positioning portions (121) cooperate with each other so that the steamer (11) can be positioned at different heights relative to the steamer support (12).

2. The steamer assembly according to claim 1, **characterized in that** the positioning holes (112) comprise at least two positioning through-holes arranged in a circumferential direction of the steamer (11) and having different sizes.

3. The steamer assembly according to claim 1 or 2, **characterized in that** the positioning holes (112) comprise a first positioning through-hole (113) and a second positioning through-hole (114) arranged in a circumferential direction of the steamer (11) and having different sizes, and the positioning portions (121) comprise a first positioning portion (123) that cooperates with the first positioning through-hole (113) and a second positioning portion (124) that cooperates with the second positioning through-hole (114), the first positioning portion (123) and the second positioning portion (124) having different heights.

4. The steamer assembly according to claim 3, **characterized in that** the positioning holes (112) comprise two first positioning through-holes (113) and two second positioning through-holes (114), which are arranged symmetrically relative to a central axis of the steamer (11) in a circumferential direction of the steamer (11).

5. The steamer assembly according to claim 3, **characterized in that** the first positioning portion (123) comprises a first horizontal part (123a) extending outward in a direction of the width of the steamer support (12), and a first vertical part (123b) extending upward and arranged substantially perpendicularly to the first horizontal part (123a), the first vertical part (123b) being capable of being inserted inside the first positioning through-hole (113), a projection of the first horizontal part (123a) in a vertical direction on a plane where the first positioning through-hole (113) is located not fully coinciding with the first positioning through-hole (113).

6. The steamer assembly according to claim 5, **characterized in that** the second positioning portion (124) comprises a second horizontal part (124a) extending outward in the direction of the width of the steamer support (12), and a second vertical part (124b) extending upward and arranged substantially perpendicularly to the second horizontal part (124a), the second vertical part (124b) and the first horizontal part (123a) being connected with each other, the second vertical part (124b) being capable of being inserted inside the second positioning through-hole (114), a projection of the second horizontal part (124a) in the vertical direction on a plane where the second positioning through-hole (114) is located not fully coinciding with the second positioning through-hole (114).

7. The steamer assembly according to claim 3, **characterized in that** the first positioning portion (123) and the second positioning portion (124) are arranged symmetrically relative to a central line of the steamer support (12) in a direction of the length of the steamer support (12); and/or
the first positioning portion (123) and the second positioning portion (124) are arranged symmetrically relative to a central line of the steamer support (12) in a direction of the width of the steamer support (12).

8. The steamer assembly according to claim 6, **characterized in that** the steamer support (12) further comprises a supporting part (126) comprising a horizontal supporting part (126a) extending in the direction of the length of the steamer support (12) and a vertical supporting part (126b) extending upward and arranged substantially perpendicularly to the horizontal supporting part (126a), the vertical supporting part (126b) and the second horizontal part (124a) being connected with each other.

9. The steamer assembly according to claim 1, **characterized in that** the steamer support (12) is provided at its top end with handle parts (125) that can be inserted into the positioning holes (112).

10. A cooking appliance, **characterized in that** it comprises:
a pot body inside which an inner pot (20) is arranged;
a lid body arranged on the pot body in such a manner that it can be opened and closed, a cooking space being formed between the lid body and the inner pot (20) when the lid body closes the pot body;
a steamer assembly according to any one of claims 1 to 9, arranged inside the inner pot (20), a bottom end of the steamer support (12) being supported on an inner wall of the inner pot (20).
